# EUROPEAN PATENT APPLICATION

(11) **EP 2 575 336 A1**
(43) Date of publication of application: **03.04.2013**
(21) Application number: 11306260.8
(22) Date of filing: 30.09.2011
(51) Int. Cl.: H04M 3/30, H04M 11/06

(54) **Diagnostic engine for DSL lines**

(71) Applicant: Alcatel Lucent, 75007 Paris (FR)
(72) Inventor: Drooghaag, Benoît, 1421 Ophain-Bois-Seigneur-Isaac (BE); Wahibi, Issam, 1030 Schaerbeeck (BE)
(74) Representative: ALU Antw Patent Attorneys

(57) **Abstract**

A diagnostic engine for remotely analyzing a fault of a telecommunication line is claimed. The diagnostic engine is coupled to a termination of the telecommunication line and further comprises:
- a first measurement module adapted to be coupled to the termination of the line and adapted to measure first predetermined line characteristics according to a Metallic Line Testing measurement technique; and
- a fault detection module to detect, based upon the first predetermined line characteristics, a fault on the line and to trigger thereupon a determining module; and
- the determining module adapted to be coupled to the termination and adapted to determine whether the line is in showtime; and
- an interrupt module adapted to be coupled to the first determining module and adapted to interrupt the showtime at a predetermined interrupt time moment; and
- a trigger module adapted to receive of anyone of the determining module and the interrupt module a no-showtime signal indicating thereby that the line being not in showtime, and to trigger thereupon activation of a second measurement module; and
- the second measurement module adapted to be coupled to the termination and to measure second predetermined line characteristics according to a Single Ended Line Testing measurement technique; and
- a combining module coupled to the first and the second measurement module and adapted to combine the measured first and second predetermined line characteristics of the line and to analyze therewith further features of the fault. (Figure 2).

## Description

The present invention relates to a diagnostic engine for remotely analyzing a fault of a telecommunication line and a method for remotely analyzing a fault of such line.

Access network operators have a challenge of responding to growing needs of customers to benefit from new high data-rate multimedia services over access networks such as Digital subscriber Lines DSL access networks. With the expansion of the DSL deployment, the pre-qualification and maintenance of the DSL network is essential.

Metallic Line Testing MELT, being derived from Narrow Band Line Testing NBLT, and Single-Ended Line Testing SELT are two loop test and qualification technologies. According to the MELT approach the electrical parameters in the telephonic-frequencies band are measured according to a low-frequencies line model. The frequency band for SELT measurements is however broader. A further difference between SELT and MELT is that SELT is done only when the DSL service is interrupted i.e. the DSL line is not in showtime, whereas the MELT can be realized independently of the service activation i.e. MELT can be performed when the DSL line is in showtime but also when the DSL line is not in showtime.

The expression Showtime is used in e.g. the DSL terminology to describe a mode where the user and the network can begin communications over the access network. This means that the known procedures that are utilized to enable rate adaptation; and adjustment of bandwidth and the data rate that can be supported on a particular copper loop to attain a certain bit error rate based on a Service Level Agreement SLA; or to achieve longer loop lengths or reach, are completed i.e. the initial rate adaptive operation and power adjustments are performed and communication between the network and a user can begin.

Furthermore, SELT is based on reflectometry measurements. An excitation signal is injected at a termination of the line and the reflected signal is measured at the same side. The two signals, excitation signal and measured signal, are compared and a reflectogram can be computed and line discontinuities can be detected and localized.

The tools which can realize these two approaches, MELT and SELT, are incorporated in the modems at a remote unit or in a central office.

A known diagnostic engine for remotely determining global line characteristics of a telecommunication line can be a complete module application which comprises a MELT measurement module and a SELT measurement module. The diagnostic engine is able to start measurements of MELT, start measurements of SELT, to diagnose, to detect faults and to stabilize and improve the performance in DSL lines.

Since the MELT technique and SELT technique have their own advantages and inconveniences, SELT can be activated complementary as a reactive process to the MELT in order to overcome the MELT limitations. Indeed, MELT is not able to localize all kind of faults such as e.g. short-circuits, water ingress, degraded contact,... . Moreover MELT has accuracy-limited capabilities for open faults. However, SELT can localize these kind of faults with a higher accuracy.

However, currently, a manual intervention is required to trigger SELT measurement when the customer complains at the helpdesk. Hereby a lot of time is spent by executing the manual procedure and a high cost for operators is generated.

An object of the present invention is to provide a diagnostic engine for remotely analyzing a fault of a telecommunication line and a related method, such as the known types but wherein a manual triggering of the process is avoided.

According to the invention, this object is achieved due to the fact that upon detection of deviations in the results of daily line testing measurements such as MELT, the execution of a service-interruption line testing measurement such as SELT is triggered. In this way the process becomes a proactive process.

Indeed, a diagnostic engine for remotely analyzing a fault of a telecommunication line is claimed. The diagnostic engine is coupled to a termination of the line and comprises:
- a first measurement module adapted to be coupled to the termination and adapted to measure first predetermined line characteristics according to a Metallic Line Testing measurement technique; and
- a fault detection module to detect, based upon the first predetermined line characteristics, a fault on the line and to trigger thereupon a determining module; and
- the determining module adapted to be coupled to the termination and adapted to determine whether the line is in showtime; and
- an interrupt module adapted to be coupled to the first determining module and adapted to interrupt the showtime at a predetermined interrupt time moment; and
- a trigger module adapted to receive of anyone of the determining module and the interrupt module a no-showtime signal indicating thereby that the line being not (or being not anymore) in showtime, and to trigger thereupon activation of a second measurement module; and
- the second measurement module adapted to be coupled to the termination and to measure second predetermined line characteristics according to a Single Ended Line Testing measurement technique; and
- a combining module coupled to the first and the second measurement module and adapted to combine the measured first and second predetermined line characteristics of the line and to analyze therewith further features of the fault.

In this way, the method for remotely analyzing a fault of a telecommunication line, describes measuring first predetermined line characteristics at the termination of the line according to a Metallic Line Testing measurement technique. Based upon the first predetermined line characteristics, a fault on the line can be detected. The occurrence of a fault can be determined by e.g. comparing over different and longer time periods the measured values. In the event when major deviations are registered, the presence of a fault can be suspected. As such, based upon the MELT measurements, faults such as short-circuits, an open contact or a bad contact can be detected.

The limitation of MELT is however, that based upon the MELT measurements, it is not possible to localize the faults.

The following steps are describing a solution to this problem.

Since MELT can work independently of service activation i.e. the line is in showtime mode or is not in showtime mode and SELT is not independently of service activation i.e. the line may not be in showtime mode, a step of triggering a determining module is introduced. The determining module determines whether the line is in showtime mode or not. In the event when the line is in showtime mode, this mode is interrupted at a predetermined interrupt time moment. The interruption of the showtime mode is executed automatically at the predetermined time moment. Once the line is not in showtime mode i.e. either it was not in showtime mode or it has been interrupted, a no-showtime signal is transmitted for indicating that the line is indeed not in showtime (anymore). Such a no-showtime signal is transmitted by either the interrupt module or by the determining module. Upon reception by a trigger module of such a no-showtime signal, the trigger is allowed to activate the second measurement module. The second measurement module measures second predetermined line characteristics at the termination of the line according to a Single Ended Line Testing measurement technique. The first and second predetermined line characteristics of the line are combined and therewith further features of the fault are analyzed. Indeed, since showtime is disabled whereby SELT can be triggered the MELT and SELT measurements can be combined whereby the MELT-based detected fault can be further analyzed to localize the fault in the line and to determine whether the fault is one of a short-circuit, open fault, water ingress, degraded contact,.... The basic idea of this application is, when a fault is detected, to complete MELT analysis with SELT measurements by firstly automatically disabling the showtime mode, when showtime mode is present, and secondly proactively and automatically triggering start-up of the SELT measurements.

The main benefit of this solution resides in the fact that instead of using separately MELT or SELT, the advantages of both MELT and SELT are exploited by using SELT as a complementary tool for MELT by means of automatically switching from the first MELT measurement technique to the second SELT measurement technique. These two approaches collaborate automatically and avoids manual intervention for obtaining more information about short-circuit, open faults, water ingress and degraded contact localization. Repair actions are taken in this way before customer complaints are received. Manual intervention is avoided for obtaining more information about short-circuit, open faults, water ingress and degraded contact localization when these faults are merely detected by MELT. An automatic process is designed which triggers SELT once a fault is detected. In this way DSL operators are gaining time, reduce the costs and the number of customer complaints at the helpdesk. It gives a real added value to known diagnostic modules.

As mentioned above, before starting SELT, the showtime mode must be disabled if it is active. There are different possibilities to ensure disablement of showtime.

A first embodiment is described by, during operation of the diagnostic engine, determining the predetermined interrupt time moment as a time moment substantially shortly after detection of the fault by the fault detection module. In this way, the service is interrupted directly after fault detection by the first measurement module.

A second implementation is described by, during operation of the diagnostic engine, determining the predetermined interrupt time moment as a time moment within a period of statistically unlikely use of the line by a user. This possibility is in fact waiting for a period when statistically it is unlikely that the customer is connected such as e.g. in the middle of the night.

Another possibility is that, during operation of the diagnostic engine, the predetermined interrupt time moment being a time moment within a period for which substantially no user traffic is measured.

A fourth embodiment is realized when, during operation of the diagnostic engine, the predetermined interrupt time moment being a time moment substantially shortly after detection of showtime-loss. Hereby the interrupt module is further adapted to wait for showtime-loss in order to implement the interruption. In fact the predetermined time moment is determined by just waiting for spontaneous showtime-loss and once this showtime-loss is detected the trigger module receives the no-showtime signal. In this way the interrupt module is not privileged to interrupt the service by means of an automatic interruption but should wait until spontaneous showtime-loss is detected.

Furthermore, the diagnostic engine according to the present application is coupled to the termination of the line that is located at a telecommunication access node location.

As mentioned above, the telecommunication access line can be a DSL telecommunication line.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

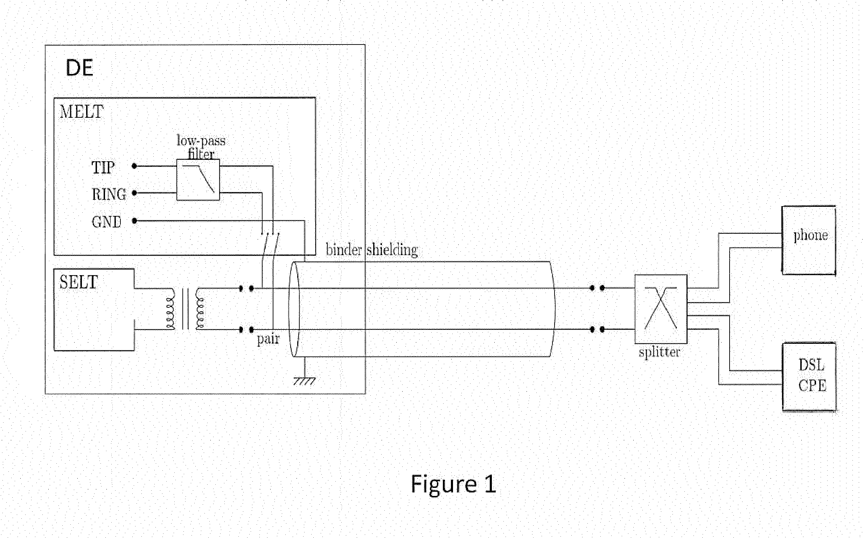

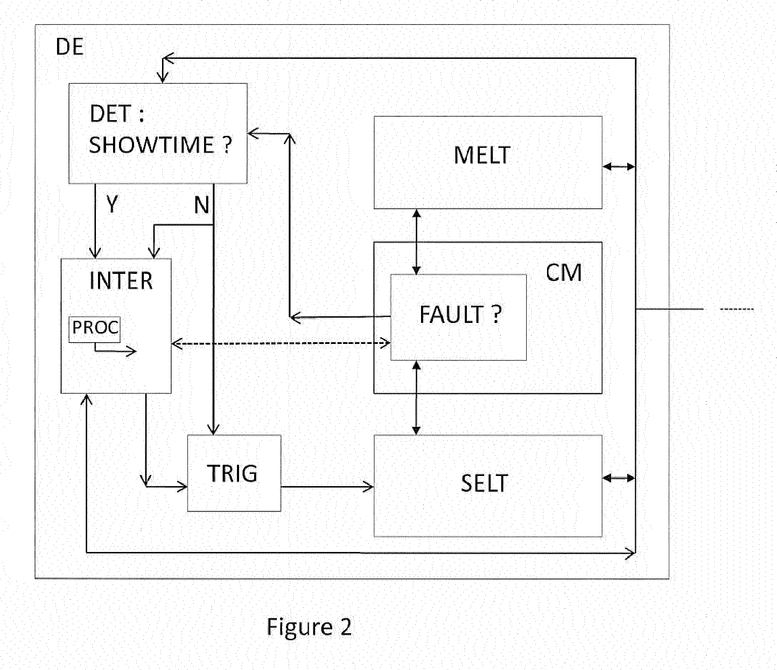

The above and other objects and features of the invention will become more apparent and the invention itself will be best understood by referring to the following description of an embodiment taken in conjunction with the accompanying drawings wherein Figure 1 represents an access telecommunication line coupled to a diagnostic engine and Figure 2 represents a diagnostic engine according to the present application.

The working of the device according to the present invention in accordance with its telecommunication environment that is shown in Figure 2 will be explained by means of a functional description of the different blocks shown therein. Based on this description, the practical implementation of the blocks will be obvious to a person skilled in the art and will therefor not be described in details. In addition, the principle working of the method for remotely analyzing a fault of a telecommunication line is described in further detail.

Referring to Figure 1, an access telecommunication line is shown. As a matter of example, the line is coupled at one termination to two end-user devices i.e. a telephone device and a DSL Customer Premises Equipment CPE. The line is coupled with the other termination to a diagnostic engine.

In the following paragraphs the global working of the respective measurement techniques MELT and SELT will be explained.

A telephone line realized by means of a twisted pair in a grounded binder shielding is shown as the telecommunication access line.

The Metallic Line Testing technique MELT is, as mentioned above, a one-ended line testing solution within a narrow bandwidth and is also known as Narrow Band Line Testing NBLT solution. Such a MELT module is coupled to a termination of the telecommunication line. A direct metallic connection is established between each of the two wires, TIP and RING. The binder shielding is connected to earth potential GND. As such MELT tests offer a three-wire measurement solution. AC and DC voltage/current measurements are collected. This allows an estimation of the narrow-band line model parameters i.e. the line characteristics according to MELT measurement techniques, such as the resistance, capacitance, its termination impedance and insulation resistance.

However, MELT techniques only delivers low frequencies circuit line characteristics. In order to investigate the DSL frequency bands, the Single Ended Line Test measurement technique SELT is used.

SELT is a reflectometry technique which analyzes wave reflections within the entire DSL-frequencies spectrum. With this SELT technique it is possible to determine as well electrical properties such as an opened wire. A SELT module is also coupled to the two wires of the pair. The analysis signal passes through a coil transformer which acts as a high-pass filter to prevent DC component measurements. Based upon the SELT measured line characteristics it is possible to estimate physical properties and global line characteristics of the telecommunication line such as loop length, loop termination and detection of specific faults. Compared to MELT, SELT provides a reliable estimation of the fault location even in the presence of short circuits. Also complex loop topologies or phenomena, showing properties within the DSL frequencies, such as the presence of bridge taps, can be identified by using this SELT measurement technique.

The diagnostic engine DE comprises such a first measurement module MELT and such a second measurement module SELT. As explained above, the MELT technique is not sufficient to analyze all the features of a fault. Furthermore the MELT technique can be combined with the SELT technique. However, this is a manual combination which is executed by the operator upon customer complaints.

This problem is solved with an automatic diagnostic engine according to the present application and which is shown in Figure 2.

Referring to Figure 2, the diagnostic engine comprises a first measurement module MELT and a second measurement module SELT. Both measurement modules are coupled to the telecommunication line as explained above. It has to be remarked that for simplicity of this Figure 2, only one line is shown for the representation of the coupling to the twisted pair.

In addition to the MELT and SELT module, the diagnostic engine DE further comprises a fault detection module FAULT, a determining module DET, an interrupt module INTER, a trigger module TRIG and a combining module CM.

The telecommunication line is, besides being coupled to the SELT and MELT module, also coupled to the determining module and the interrupt module.

The fault module FAULT is coupled to the first measurement module MELT and, according to this embodiment, the fault module is comprised in the combining module CM.

The fault module FAULT is further coupled to the determining module which on its turn is coupled to the interrupt module and the trigger module.

The trigger module is further coupled to the second measurement module SELT being further coupled to the combining module.

The working of the diagnostic engine DE according to the present application will now be explained.

As explained above, the first measurement module MELT measures the first predetermined line characteristics according to a Metallic Line Testing measurement technique. This MELT measurement technique is similar to the MELT measurement technique as explained for Figure 1.

The MELT measurements are saved in a memory module (not shown), analyzed and compared to previous measurement. This memory can for instance be integrated in the fault detection module. In the event of a major deviation between actual measurements and previous measurements, the fault detection module detects based upon these first predetermined line characteristics a fault and automatically generates an alarm signal i.e. the fault detection module triggers immediately the determining module.

Upon reception such a trigger signal, the determining module DET determines automatically whether the line is in showtime or not. According to the actual embodiment the determining module is coupled to the line and is enabled to determine whether one of the users of the end devices and the network are in communications over the access network. It has to be remarked that the determination of showtime-mode is not limited to such a direct coupling to the lines itself. Alternative embodiments such as e.g. analyzing of the received data at the network site can be used as well.

In the event when showtime-mode is confirmed for the telecommunication line an automatic trigger is provided to the interrupt module.

In the event when showtime-mode is not confirmed for the telecommunication line an automatic trigger is directly provided towards the trigger module.

In the event when the interrupt module receives a trigger from the determining module, it needs to interrupt the showtime at a predetermined interrupt time moment. The predetermined interrupt time moment can be determined according to different embodiments which can be present and integrated in the interrupt module INTER in parallel to each other. Activation and application of one or another embodiment can be dependent of predetermined rules and conditions. Such rules and conditions can be e.g. the assigned bandwidth to a user, the time-moment of first detection of the fault by the MELT module, ...

The determination of the predetermined time-moment is realized with a processor PROC, shown in Figure 2 being comprised in the interrupt module INTER.

One possible time-moment for interrupting showtime is practically immediately after detection of the fault. In this way to the predetermined time-moment is a time moment substantially shortly after detection of the fault. A dotted line is shown in Figure 2 between the fault detection module and the interrupt module to show a possible connection between both for implementation of this direct approach.

Another possible time moment for interruption of the showtime-mode is a time moment within a period for which it is statistically unlikely that the telecommunication line is used by one of the users of the end-user equipment. Such a statistically determined period could be for instance in the middle of the night. This period can be determined as an average in time for one respective line, but can as well be determined as an average over a plurality of lines.

A further possible implementation of the time moment for interruption is a time moment within a period for which substantially no user traffic is measured. The difference with the previous method is that here the actual measured traffic is taken into account whereas with the previous method statistics are taken into account.

Finally a last way for determination of the predetermined time moment is the approach of spontaneous showtime loss. In this way the interrupt module just waits until it receives from the showtime module a second signal that indicates that, although showtime was active at the time when the fault was detected, it has been lost spontaneously in the mean time. According to this implementation the interrupt module is further adapted to wait for showtime loss in order to implement the interruption as such.

Once the interrupt module interrupted the showtime-mode, it provides a no-showtime signal towards the trigger module.

In this way, the trigger module receives of anyone of the determining module and the interrupt module a no-showtime signal. The reception of the no-showtime signal indicates that the second measurement module MELT is allowed and indeed needs to be activated.

The second measurement module SELT is adapted to measure second predetermined line characteristics according to a Single Ended Line Testing measurement technique. This SELT measurement technique is similar to the SELT measurement technique as explained for Figure 1.

Finally, the combining module CM combines the measured first and second predetermined line characteristics of the line and analyzes therewith further features of the fault.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A diagnostic engine (DE) for remotely analyzing a fault of a telecommunication line, said diagnostic engine being adapted to be coupled to a termination of said line and **characterized in that** said diagnostic engine comprises:
- a first measurement module (MELT) adapted to be coupled to said termination and adapted to measure first predetermined line characteristics according to a Metallic Line Testing measurement technique; and
- a fault detection module (FAULT) to detect, based upon said first predetermined line characteristics, a fault on said line and to trigger thereupon a determining module (DET); and
- said determining module (DET) adapted to be coupled to said termination and adapted to determine whether said line is in showtime; and
- an interrupt module (INTER) adapted to be coupled to said first determining module and adapted to interrupt said showtime at a predetermined interrupt time moment; and
- a trigger module (TRIG) adapted to receive of anyone of said determining module and said interrupt module a no-showtime signal indicating thereby that said line being not in showtime, and to trigger thereupon activation of a second measurement module; and
- said second measurement module (SELT)adapted to be coupled to said termination and to measure second predetermined line characteristics according to a Single Ended Line Testing measurement technique; and
- a combining module (CM) coupled to said first and said second measurement module and adapted to combine said measured first and second predetermined line characteristics of said line and to analyze therewith further features of said fault.

2. The diagnostic engine (DE) of claim 1, **characterized in that** during operation of said diagnostic engine, said predetermined interrupt time moment being a time moment substantially shortly after detection of said fault by said fault detection module (FAULT).

3. The diagnostic engine of claim 1, **characterized in that** during operation of said diagnostic engine, said predetermined interrupt time moment being a time moment within a period of statistically unlikely use of said line by a user.

4. The diagnostic engine of claim 1, **characterized in that** during operation of said diagnostic engine, said predetermined interrupt time moment being a time moment within a period for which substantially no user traffic is measured.

5. The diagnostic engine of claim 1, **characterized in that** during operation of said diagnostic engine, said predetermined interrupt time moment being a time moment substantially shortly after detection of showtime-loss whereby said interrupt module is further adapted to wait for showtime-loss in order to implement said interruption.

6. The diagnostic engine according to claim 1, **characterized in that** said termination of said line is located at a telecommunication access node location.

7. The diagnostic engine according to claim 1, **characterized in that** said line is a DSL telecommunication line.

8. A method for remotely analyzing a fault of a telecommunication line **characterized in that** said method comprises the steps of :
- measuring first predetermined line characteristics at a termination of said line according to a Metallic Line Testing measurement technique; and
- detecting, based upon said first predetermined line characteristics, a fault on said line and thereby, in the event of detecting such fault, triggering a determining module; and
- determining with said determining module whether said line is in showtime; and
- interrupting said showtime at a predetermined interrupt time moment; and
- transmitting a no-showtime signal for indicating that said line being not in showtime;
- triggering, upon reception of such no-showtime signal, activation of a second measurement module; and
- with said second measurement module measuring second predetermined line characteristics at said termination of said line according to a Single Ended Line Testing measurement technique; and
- combining said measured first and second predetermined line characteristics of said line and analyzing therewith further features of said fault.

9. The method according to claim 8, **characterized in** by determining said predetermined interrupt time moment by means of a time moment being substantially shortly after detecting said fault.

10. The method according to claim 8, **characterized in** by determining said predetermined interrupt time moment by means of a time moment within a period of statistically unlikely use of said line by a user.

11. The method according to claim 8, **characterized in** by determining said predetermined interrupt time moment by means of a time moment within a period for which substantially no user traffic is measured.

12. The method according to claim 8, **characterized in** by determining said predetermined interrupt time moment by means of a time moment being substantially shortly after detection of showtime loss whereby said step of interrupting said showtime being implemented by means of waiting for spontaneous showtime loss.
